# EUROPEAN PATENT SPECIFICATION

(11) **EP 3 231 284 B1**
(45) Date of publication and mention of the grant of the patent: **16.09.2020**
(21) Application number: 17000613.4
(22) Date of filing: 11.04.2017
(51) Int. Cl.: A01N 59/20, A01N 59/06, A01P 7/04

(54) **USE OF A COMPOSITION FOR COMBATING PESTS OF OLIVE TREES**
VERWENDUNG EINER ZUSAMMENSETZUNG ZUR BEKÄMPFUNG VON OLIVENBAUMSCHÄDLINGEN
UTILISATION D'UNE COMPOSITION POUR LUTTER CONTRE LES PARASITES DES OLIVERS

(30) Priority: 14.04.2016 IT UA20162607
(43) Date of publication of application: 18.10.2017
(73) Proprietor: MANICA S.p.A., 38068 Rovereto (Trento) (IT)
(72) Inventor: MANICA, Michele, 38068 Rovereto (TN) (IT); CANTINI, Claudio, 58022 Follonica (GR) (IT); SANI, Graziano, 50142 Firenze (IT)
(74) Representative: Pipparelli, Claudio

(56) References cited:
- FR-A1- 2 927 768
- D. A Prophetou-athanasiadou ET AL: "Deterrence of oviposition in Dacus oleae by copper hydroxide", Entomologia Experimentalis et Applicata, 1 October 1991 (1991-10-01), pages 1-5, XP055296387, Oxford, UK DOI: 10.1111/j.1570-7458.1991.tb02389.x Retrieved from the Internet: URL:http://onlinelibrary.wiley.com/store/1 0.1111/j.1570-7458.1991.tb02389.x/asset/j. 1570-7458.1991.tb02389.x.pdf?v=1&t=is0f6of d&s=4d2753118351c12233f75e60e105f86be584ff d6
- A BELCARI ET AL: "The use of copper products to control the olive fly (Bactrocera oleae) in central Italy", INTEGRATED PROTECTION OF OLIVE CROPS IOBC/WPRS BULL., CHANIA (CRETE, GREECE), vol. 28 (9), 1 January 2005 (2005-01-01), pages 45-48, XP055296081,
- LENTINI ANDREA ET AL: "Experiments for the control of olive fly in organic agriculture", INTEGRATED PROTECTION OF OLIVE CROPS IOBC/WPRS BULL., CHANIA (CRETE, GREECE), vol. 28(9), 1 January 2005 (2005-01-01), pages 73-76, XP055296389,
- SERENA MUCCILLI ET AL: "Yeast dynamics during the fermentation of brined green olives treated in the field with kaolin and Bordeaux mixture to control the olive fruit fly", INTERNATIONAL JOURNAL OF FOOD MICROBIOLOGY, ELSEVIER BV, NL, vol. 148, no. 1, 17 April 2011 (2011-04-17), pages 15-22, XP028376078, ISSN: 0168-1605, DOI: 10.1016/J.IJFOODMICRO.2011.04.019 [retrieved on 2011-04-22]
- P. BENGOCHEA ET AL: "Are kaolin and copper treatments safe to the olive fruit fly parasitoid Psyttalia concolor?", JOURNAL OF PEST SCIENCE, vol. 87, no. 2, 1 June 2014 (2014-06-01), pages 351-359, XP055296390, Berlin/Heidelberg ISSN: 1612-4758, DOI: 10.1007/s10340-013-0543-5
- A G MANOUKAS: "Effect of excess levels of inorganic salts upon survival, growth and pupal yield of Dacus oleae (Gmel.) larvae", ZEITSCHRIFT FÜR ANGEWANDTE ENTOMOLOGIE, vol. 93, no. 1-5, 1 January 1982 (1982-01-01), pages 208-213, XP055296393, DOI: 10.1111/j.1439-0418.1982.tb03588.x
- Mary Concklin: "Considerations for Copper Sprays in Tree Fruits", , 3 April 2013 (2013-04-03), pages 1-2, XP055296408, Retrieved from the Internet: URL:http://ipm.uconn.edu/documents/raw2/31 0/Considerations for Copper Sprays in Tree Fruits April 3 2013.pdf [retrieved on 2016-08-18]
- Anonymous: "SCHEDA DI SICUREZZA SCHEDA DATI DI SICUREZZA - POLTIGLIA MANICA 20WG", , 1 February 2018 (2018-02-01), XP055560864, Retrieved from the Internet: URL:http://www.manica.com/wp-content/uploa ds/2012/11/POLTIGLIA-MANICA-20-WG-Rev.-05- feb.-2018_MSDS049.05.pdf [retrieved on 2019-02-22]
- Anonymous: "Why In Greece People Paint Their Tree Trunks White??", Corfu Walking Tours Blog, 24 February 2016 (2016-02-24), XP055560898, Retrieved from the Internet: URL:https://corfuwalkingtours.com/why-in-g reece-people-paint-their-tree-trunks-white / [retrieved on 2019-02-22]

## Description

### FIELD OF APPLICATION OF THE INVENTION

The present invention concerns the use of a composition of active material for the treatment of olive trees to reduce infestation of the fruit of olive trees by the olive fly.

The olive fly, *Bactrocera oleae* (formerly *Dacus oleae*), is an insect belonging to the *Dacinae* subfamily (Munro, 1984). It is a carpophagous species, the larva of which tunnels into the fruit of olive trees. It is considered the most serious olive pest.

The females of *B. oleae* lay their eggs from the end of July (depending on the area), when the olive has a diameter of at least 7-8 mm. The eggs are laid by piercing the skin of the olive with the ovipositor and leaving one single egg in the hollow below.

The egg hatches after a period that varies, according to weather conditions, from 2-3 days in the summer to approximately ten days in the autumn. The newly hatched larva initially digs a tunnel on the surface but later moves deeper into the flesh until it reaches the stone. During larval development, two changes occur with consequent increase in the size of the larva.

Around the third change, the larva at its third stage moves towards the surface and prepares the exit hole for the adult, gnawing at the flesh until it leaves a very thin surface layer. During this phase, the olive clearly shows signs of the attack because it appears darker in conjunction with the tunnelling. On the surface, a translucent circular hole due to the remaining residual skin becomes apparent. The pupa remains dormant in the hollow below, protected within the puparium formed by the exuviae of the mature larva.

At maturity, the adult breaks the exuviae of the pupa and emerges from the puparium. It breaks the skin surface left by the larva by force and leaves the exit hole.

In late autumn and winter its behaviour changes: the mature larva emerges from the olive and drops onto the ground where pupation takes place.

The adults feed mainly on honeydew. Since their basic diet is low in protein, they are particularly attracted to materials that emit volatile nitrogenous substances, such as bird droppings, to supplement their protein requirements.

The damage caused by the olive fly can be of three types:
- Destruction of the pulp of the fruit;
- Dropping of the infested fruit;
- Deterioration in the quality of the olives and the oil.

The first problem is less serious since the loss of pulp ranges from 3 to 5%.

Olive drop is undoubtedly the most important damage caused by the olive fly, as it can affect a substantial part of the production which cannot be used.

Lastly, the infestation causes a series of biochemical changes in the olive due to the presence of oxygen which penetrates into the fruit through the exit hole made by the larva. The best known effect is an increase in the acidity level, i.e. the percentage of free fatty acids.

The above-mentioned damage caused by the olive fly can vary in extent depending on seasonal patterns, olive variety, aspect of the plant, exposure and position of the ground.

Various processes are known in the art for reducing and/or preventing the damage caused by the olive fly.

A first technique is based on preventive treatment (adulticide) which involves repeated and localized distributions of protein baits poisoned with insecticides. This technique involves the massive use of broad spectrum insecticides which do not take account of the useful insects. Furthermore, their high toxicity will presumably lead to their banning and/or replacement in the near future.

A second technique is based on curative treatment (larvicide) which involves the application of insecticide mixtures over the whole canopy when the attack threshold is reached (approximately 1-2% of fruit affected). The most widely used active ingredient is dimethoate, a synthetic organophosphate insecticide, preferred also due to its high hydrosolubility and systemicity inside the fruit. The widespread use of this product, at times excessive, has led to a review of its use, particularly in fruit growing. In the near future, restrictive measures are envisaged throughout the olive growing sector, not only in Italy but also at European level.

A third technique is biological treatment which involves mass trapping of the adults of B. *oleae* by means of traps with bait of various types such as hydrolyzed proteins or ammonium salts (capture of females) and pheromones (capture of males). These traps contain insecticides of varying strengths, for example dimethoate. This method cannot always be used due to the dimensions of the plants and lushness of the canopy which would require the use of a large number of traps, incurring excessive costs. Furthermore, this technique must be integrated with other methods which complete its effectiveness, for example insecticide treatment on the whole canopy, especially in years when the infestation is particularly serious.

To combat the olive fly the need is therefore felt for new products which are more effective, persist longer on the plant and are less polluting for the soil and water.

D.A. Prophetou-Athanasiadou et al. : Entomologia Experimentalis et Applicata, 1991, pages 1-5, discloses a study relating to check whether copper hydroxide had an oviposition deterrent effect on the olive fruit flies, in addition to its adverse effect on larval growth. This study was carried out using a composition comprising a non-ionic wetting and spreading agent.

A. Belcari et al.: Integrated Protection of Olive Crops, vol. 28 (9), 2005. pages 45-48, discloses the use of a composition comprising (i) a Bordeaux mixture without the presence of dispersants, and (ii) Coprantol C-450 and Coprantol Ultramicron.

P.Bengochea et al.: Journal of Pest Science, vol. 87, no. 2, June 2014, pages 351-359, evaluates direct mortality caused by kaolin and copper salt on parasitoid. The active ingredients tested were kaolin, Bordeaux mixture, and copper oxychloride.

"Scheda dati di sicurezza - POLTIGLIA MANICA 20WG, February 2018, discloses the composition of Poltiglia Manica 20 WG comprising 69-79% (w/w) technical Bordeaux mixture and 0.5-1.5% (w/w) sodium diisopropyl sulfonate.

The present invention, which overcomes the above drawbacks, concerns the use of a composition for combating the olive pest, *Dacus Oleae,* said composition comprising an active part consisting of:
(a) one or more cupric material, and
(b) one or more alkaline earth metal hydroxide, wherein said alkaline earth metal is taken from the group consisting of calcium, magnesium and mixtures thereof,
characterised in that the weight ratio (b) to (a) is from 31/1 to 5/1,
and wherein the cupric material (a) is selected from a cupric salt, a basic cupric salt, a Bordeaux mixture, cupric oxychloride, cupric oxide, cupric hydroxide, and mixtures thereof.

The term "calcium hydroxide" indicates calcium hydroxide as such or containing the usual impurities, mainly MgO, CaO and CaCO₃. In the present invention it is sufficient to use technical calcium hydroxide containing the above-mentioned impurities.

The term "cupric salt" indicates a hydrosoluble salt of Cu⁺⁺, for example cupric nitrate, cupric chloride, cupric sulphate. In the present description, the terms "divalent", "cupric" and "copper" are interchangeable, and always refer to divalent copper.

Typical examples of basic cupric salts are CuSO₄.3Cu(OH)₂ and CuCO₃.3Cu(OH)₂.

Bordeaux mixture is a well-known copper-based contact fungicide, with preventive action, used as a fungicide in agriculture. It has the general formula CuSO₄.3Cu(OH)₂.3CaSO₄ and is prepared by neutralization of pentahydrate cupric sulphate with calcium hydroxide. The neutralization is necessary to remedy the phytotoxicity of the pure cupric sulphate. Bordeaux mixture usually has a pH ranging from 6.0 to 8.5, preferably 6.5 to 7.5, while the copper content ranges from 26% by weight to 27.5% by weight, preferably 26.5% by weight to 27% by weight. Obviously slight variations in the copper and pH level can be tolerated.

Cupric oxychloride, CuCl₂^{∗}3Cu(OH)₂, has a pH ranging from 6.0 to 7.5, preferably 6.5 to 7.0, and the copper content of the oxychloride can range from 56% to 59%, preferably 57% to 58 % of Cu. Obviously slight variations in the copper and pH level can be tolerated. It can be obtained by alkaline precipitation from cupric chloride according to the reaction:

4CuCl₂ + 6OH⁻ → CuCl₂^{∗}3Cu(OH)₂ + 6 Cl⁻

For preparation of the cupric oxide and the cupric hydroxide, reference should be made to the known art.

In the preferred embodiment the alkaline earth metal of (b) is calcium.

In the even more preferred embodiment, the compound (a) is taken from Bordeaux mixture, cupric oxychloride and mixtures thereof.

It should be noted that the term "active part" indicates the mixture of the two chemical products (a) and (b), the presence of which has proved to be essential in treatment of the olive fly. The "composition" used in the present invention, on the other hand, comprises the "active part" which consists in the mixture of (a) and (b), together with other components, for example dispersing agents, surface-active agents, wetting agents and others, in particular dispersing agents. The composition used in the present invention is prepared by mixing together the two solid components (a) and (b) until they are homogenized, preferably in the presence of dispersing agents. It is also preferable for the components to be not only mixed but also ground until solid particles are obtained having preferably a mean diameter ranging from 0.4 µm to 40 µm. The above-mentioned granulometric distribution can be obtained by using high efficiency grinders. In a first example of embodiment of the present invention, the composition consists of:

| | |
|---|---|
| Bordeaux mixture: | 7 to 8% by weight, |
| cupric oxychloride: | 4 to 6% by weight, |
| calcium lignosulfonates: | 4 to 6% by weight, |
| calcium and ammonium hydroxide: | to 100% by weight. |

In a second example of the present invention, the composition consists of:

| | |
|---|---|
| black copper oxide CuO (79% Cu): | 5.5 to 6.0% by weight, |
| Cu(OH)₂ (62% Cu): | 0.7 to 0.9% by weight, |
| calcium and ammonium lignosulfonate: | 4 to 6% by weight, |
| calcium and ammonium hydroxide: | to 100% by weight. |

Both the above two compositions can be registered as EC fertilizer, permitted in organic agriculture.

In the preferred embodiment, the composition used in the present invention is used in the form of a water dispersion. The term "water dispersion" indicates that the active composition of the present invention is not soluble in water, but is in the form of solid particles uniformly dispersed in the water. It is known that the obtaining of uniform water dispersions requires the presence of dispersing agents which have the characteristic of being soluble in water. They are necessary to facilitate wetting of the solid, to obtain stable dispersions and to ensure long-term stability (for example to avoid variations in viscosity, sedimentation of the phases and coalescence of the particles). Typical non-limiting examples of the above-mentioned dispersing agents, which can be ionic or non-ionic, are the copolymers ethylene oxide and propylene oxide, the salts of polynaphthalenesulfonates condensed with formaldehyde and lignosulfonates. In the preferred embodiment, the dispersing agents are taken from the group consisting of the lignosulfonates of alkaline metals, alkaline earth metals, ammonium metals, and mixtures thereof. Even more preferred are the lignosulfonates of ammonium, products permitted in organic agriculture under EEC Regulation n° 2092/91 of 24/06/1991.

The dispersing agents will be present in a quantity that varies depending on various factors, such as solids content, granulometry of the solids, type of dispersing agent etc. Indicatively, but in a non-limiting manner, the dispersing agents are present in quantities from 2% to 10% by weight, preferably 4% to 6% by weight, with respect to the sum of the solids (a) and (b).

The above-mentioned aqueous dispersion can also contain other compounds with different functions, for example surface-active agents, wetting agents, viscosizing agents, compounds which are well known to persons skilled in the art.

In the compositions used in the present invention, the alkalinity of the hydroxide of the alkaline earth metal and its concentration with respect to the other compounds is so high as to make all the basic cupric salts present unstable, converting them into cupric hydroxide:

CuSO₄·3Cu(OH)₂ + Ca(OH)₂ → 4 Cu(OH)₂ + CaSO₄

(for the brochantite, a component of the Bordeaux mixture)

CuCl₂·3Cu(OH)₂ + Ca(OH)₂ → 4 Cu(OH)₂ + CaCl₂

(for the cupric oxychloride)

In turn, due to the impurities of Fe(II), always present in traces, the cupric hydroxide is metastable, and the Fe(ll) catalyses its conversion to black oxide (see US 6,596,246), according to the reaction:

Cu(OH)₂ → CuO + H₂O

It would therefore seem that the active part of the present formulation placed in water is, ultimately, a mixture of CuO + Cu(OH)₂ with non-known ratios which depend on the degradation of the hydroxide.

The water dispersion used in the present invention has a concentration of solids (a) + (b) ranging from 1 kg/100 litres to 5 kg/100 litres, preferably 2 kg/100 litres to 4 kg/100 litres. Usually the above-mentioned dispersion must be distributed in approximately 1000 litres /hectare of field. As regards treatment of the olive trees with the water dispersion described above, it is preferable to carry out at least three treatments per year on the olive grove, starting in July with applications approximately once a month. Depending on the weather, more treatments may be necessary, in fact in the case of abundant rainfall, the formulation of the invention is washed off the canopy and must therefore be re-applied. The dispersion is sprayed on the plants using the well-known atomizers.

According to the hypothetical mechanism of action of the active composition of the present invention, once sprayed on the plant at the above concentrations, the calcium hydroxide, or alternatively the magnesium hydroxide, acts as an aerial ligand, converting into carbonate, according to the reaction:

M(OH)₂ + CO₂ → MCO₃ + H₂O

where M = Ca, Mg. The carbonation *in situ* creates on the surface of the leaves and the surface of the fruit a white coating which is difficult to wash away; this disorientates the insect and discourages it from reaching the plant. This physical effect is very persistent and visible for many weeks, hence use of the product is advantageous in economic terms.

The carbonation of the base present in the "active part" causes a rapid change in the pH from a very high value to a value compatible with the plant physiology. For this reason the product does not damage the crop in any way.

Lastly, the copper present in the active part of the composition interacts with the symbiont microorganisms of the olive fly, discouraging its activity. The insect therefore suffers from this lack of bacterial activity and tends to move elsewhere.

The synergic action of the two effects, i.e. the physical coating effect and the chemical effect of the copper, provide excellent results in control of the olive fly.

The frequency of treatment depends on two factors:
1) Washing away of the product from the plant surface
2) Increase in the number of insect flights, which can be controlled by sticky traps

Another fundamental aspect is control of the evapo-transpiration.

Coating of the plant with a white compound, like the one obtainable by using the active part of the present invention, results in greater reflection of the sunlight, reducing the heat absorbed by the plant. Due to this aspect it is possible to reduce the water stress on the crop, thereby reducing the water requirement of the plant.

Compared to the known art, the composition of the invention has various advantages:
- all the components are of natural origin or permitted in organic agriculture;
- the risk class (harmfulness) of the composition is very low and therefore its use does not pose particular risks for the operator;
- its action vis-à-vis the insect is mainly of mechanical/physical type, preventing easy recognition of the fruit by coating the treated parts; it therefore does not activate the "resistance" processes which are typical of synthetic insecticide products and due to their repeated use over the years;
- given the low toxicological, ecological and environmental profile of all the components of the composition, it is not likely to be restricted in the near future;
- the positive side effect of protecting the plants treated against "heatstroke" caused by the sun, due to the reflecting power of the active composition once it has been sprayed on the plants, provides improved water balance within the plant with consequent reduced susceptibility to problems connected with periods of drought;
- positive effect of limiting some fungal pathogens (*spilocea oleagina, pseudomonas siringae*) and bacterial pathogens (*agrobacterium tumefaciens*) due to the presence of the copper.

The following examples are illustrated for a better understanding of the present invention.

### Example 1 - Test carried out in 2014

The tests to evaluate the effectiveness of the present invention against the olive fly were performed in 2014 on a farm with a surface area of approximately 3.5 hectares of olive trees grown organically. The olive grove was divided into two areas, one for treatment with the composition of the present invention and the other as a control. The areas are approximately 200 metres from each other and consist of plants of the same crop.

The treatments were performed using a water dispersion containing the composition of the present invention in a quantity of 3.5 kg per 100 litres of water.

In this case the active part of the composition consisted of 7.40% by weight of Bordeaux mixture and 87.60% of calcium hydroxide.

The experimental protocol entailed at least three treatments, starting in July, with applications approximately once a month. Since 2014 was a very rainy year, five treatments were carried out. The observations were made at the end of September when the olives are more susceptible to the fly.

The results were:

| | |
|---|---|
| Non-treated sample: | fruit affected = 73% |
| Present invention: | fruit affected = 40%. |

The above data show that even in a year with serious infestation like 2014, the composition is able to contain the infestation with an effectiveness of approximately 50%.

### Example 2

The test was repeated in 2015 using the same quantity of composition as that used in example 1 and with the same equipment. The test was performed on the same olive grove as example 1.

In the test location, rain was very scarce during the summer of 2015 and therefore only two treatments were carried out, one at the end of June and the other at the end of August.

The results were:

| | |
|---|---|
| Non-treated sample: | fruit affected = 45% |
| Present invention: | fruit affected = 11%. |

The above data show that in a year when the olive fly is present to a lesser extent, the composition of the present invention was able to combat the insect showing an efficiency of approximately 75%.

### Example 3 - First industrial formulation

A composition was prepared according to the present invention by mixing in a horizontal mixer with capacity of 6 m³ the following substances:
- Bordeaux mixture 27% Cu - 185 kg
- Cupric oxychloride 57% Cu - 132 kg
- Lignosulfonate of calcium and ammonium, max 4% of N (nitrogen) - 125 kg
- Calcium hydroxide, with minimum titre of Ca(OH)₂ of 92 % - 2058 kg

The mixing was carried out for 2 h, and the product was then ground until obtaining a granulometry of < 30 micron. Approximately 2500 kg of product were obtained.

This product has a very alkaline pH, approximately 12.60, dissolving 1 g of formulation in 100 ml of demineralized water.

### Example 4 - Second industrial formulation

A composition was prepared according to the present invention by mixing in a horizontal mixer with capacity of 6 m³ the following substances:
- Black cupric oxide (CuO), 79% Cu - 143 kg
- Cupric hydroxide (Cu(OH)₂), 62% Cu - 20 kg
- Lignosulfonate of calcium and ammonium, max 4% of N (nitrogen) - 125 kg
- Calcium hydroxide, with minimum titre of Ca(OH)₂ of 92 % - 2212 kg

The mixing was carried out for 2 h, and the product was then ground until obtaining a granulometry of < 30 micron. Approximately 2500 kg of product were obtained.

This product also has an alkaline pH, approximately 12.66, dissolving 1 g of formulation in 100 ml of demineralized water.

Both the examples n° 3 and 4 showed analogous behaviour in a water solution in terms of pH. A process of darkening was noted when heating the suspension of example n°3 (1 g / 100 ml) for 10 minutes under stirring at 80°C, obtaining a colour similar to the colour obtained in the suspension of example n°4 (1 g / 100 ml).

The test at high temperature is designed to rapidly simulate what actually forms inside the atomizer and on the leaf surface during the treatment.

This simulated situation confirms the hypothesis that any composition of copper compounds, with ratio between lime and copper compound ranging from 31/1 to 5/1, preferably 18/1 to 6/1, tends to decompose into an undefined mixture of CuO and Cu(OH)₂, due to the excess of the base Ca(OH)₂ present in the formulation.

Use in the field of the composition of example 3 or the composition of example 4 would therefore seem to make no difference, since in both cases the active substances are the same: cupric oxide and hydroxide.

## Claims

1. Use of a composition for combating the olive pest, *Dacus oleae,* said composition comprising an active part consisting of:
(a) one or more cupric material, and
(b) one or more alkaline earth metal hydroxide, wherein said alkaline earth metal is taken from the group consisting of calcium, magnesium and mixtures thereof,
**characterised in that** the weight ratio (b) to (a) is from 31/1 to 5/1,
and wherein:
the cupric material (a) is selected from a cupric salt, a basic cupric salt, a Bordeaux mixture, cupric oxychloride, cupric oxide, cupric hydroxide, and mixtures thereof,
the composition is present as a water dispersion further containing dispersing agents and wherein Bordeaux mixture has the general formula CuSO₄.3Cu(OH)₂.3CaSO₄.

2. Use according to claim 1, wherein the alkaline earth metals of (b) is calcium.

3. Use according to claims 1 to 2, wherein the cupric material (a) is selected from the group consisting of Bordeaux mixture, cupric oxychloride, cupric oxide, cupric hydroxide and mixture thereof.

4. Use according to claim 1, wherein the weight ratio (b) to (a) is from 18/1 to 6/1.

5. Use according to anyone of claims 1 to 4, wherein the dispersing agents are present in a quantity from 2 to 10 weight percent, preferably from 4 to 6 weight percent, of the sum (a) + (b).

6. Use according to claim 5, wherein the solids (a) + (b) are present in the water dispersion in a total quantity from 1 kg/100 litres to 5 kg/100 litres, preferably from 2 kg/100 litres to 4 kg/100 litres.

7. Use according to anyone of the claims 5 to 6, wherein the dispersing agent is taken from the group consisting of lignosulfonates of alkaline metals, alkaline earth metals and ammonium.

8. Use according to claim 7, wherein the dispersing agent is taken from the group consisting of ammonium lignosulfonates.

## Patentansprüche

1. Die Anwendung einer Zusammensetzung zur Bekämpfung von Olivenschädlingen, *dacus oleae,* wobei die genannte Zusammensetzung jeweils einen aktiven Teil umfasst, welcher aus Folgendem besteht:
(a) einem oder mehreren Kupfermaterialien, und
(b) einem oder mehreren Erdalkalimetallhydroxiden, wobei das genannte Erdalkalimetall der
Gruppe entnommen wird, welche aus Kalzium, Magnesium und deren Mischungen besteht,
**dadurch gekennzeichnet, dass** das Gewichtsverhältnis (b) zu (a) zwischen 31/1 und 5/1 liegt,
und wobei:
das Kupfermaterial (a) jeweils aus Kupfersalz, basischem Kupfersalz, einer Bordeaux-Mischung, Kupferoxychlorid, Kupferoxyd, Kupferhydroxyd und deren Mischungen gewählt wird, und die Zusammensetzung als Wasserdispersion vorhanden ist, welche desweiteren entsprechende Dispergiermittel enthält, und
wobei die Bordeaux-Mischung die allgemeine Formel CuSO₄3Cu(OH)₂3caSO₄ aufweist.

2. Die Anwendung gemäß Anspruch 1, wobei die Erdalkalimetalle von (b) Kalzium sind.

3. Die Anwendung gemäß den Ansprüchen von 1 bis 2, wobei das Kupfermaterial (a) jeweils aus der Gruppe gewählt wird, welche aus der Bordeaux-Mischung, Kupferoxychlorid, Kupferoxyd, Kupferhydroxyd und deren Mischungen besteht.

4. Die Anwendung gemäß Anspruch 1, wobei das Gewichtsverhältnis (b) zu (a) 18/1 bis 6/1 beträgt.

5. Die Anwendung gemäß einem beliebigen der Ansprüche von 1 bis 4, wobei die Dispergiermittel in einer Menge von jeweils 2 bis 10 Gewichtsprozent vorhanden sind, und zwar vorzugsweise von 4 bis 6 der Summe (a) + (b).

6. Die Anwendung gemäß Anspruch 5, wobei die Feststoffe (a) + (b) in der Wasserdispersion in einer Gesamtmenge von 1 kg/100 Liter bis 5 kg/100 Liter vorhanden sind, und zwar vorzugsweise von 2 kg/100 Liter bis 4 kg/100 Liter.

7. Die Anwendung gemäß einem beliebigen der Ansprüche von 5 bis 6, wobei das Dispergiermittel der Gruppe entnommen wird, die aus Ligninsulfonaten von Alkalimetallen, Erdalkalimetallen und Ammonium besteht.

8. Die Anwendung gemäß Anspruch 7, wobei das Dispergiermittel der Gruppe entnommen wird, die aus Ammoniumligninsulfonaten besteht.

## Revendications

1. Utilisation d'une composition pour lutter contre les parasites des olives, *Dacus oleae,* ladite composition comprenant une partie active composé de :
(a) un ou plusieurs matériaux en cuivre, et
(b) un ou plusieurs hydroxydes de métal alcalino-terreux, où ledit métal alcalino-terreux est choisi dans le groupe composé de calcium, magnésium et des mélanges de ceux-ci,
**caractérisée en ce que** le rapport en poids (b) par rapport à (a) est de 31/1 à 5/1, et où :
le matériau en cuivre (a) est sélectionné parmi un sel cuivrique, un sel cuivrique basique, une bouillie bordelaise, un oxychlorure cuivrique, un oxyde cuivrique, un hydroxyde cuivrique et des mélanges de ceux-ci,
la composition est présente comme une dispersion aqueuse comprenant en outre des agents de dispersion et où la bouillie bordelaise a la formule générale
CuSO₄.3Cu(OH)₂.3CaSO₄.

2. Utilisation selon la revendication 1, où les matériaux alcalino-terreux de (b) sont du calcium.

3. Utilisation selon les revendications 1 et 2, où le matériau en cuivre (a) est sélectionné dans le groupe composé de bouillie bordelaise, oxychlorure cuivrique, oxyde cuivrique, hydroxyde cuivrique et des mélanges de ceux-ci.

4. Utilisation selon la revendication 1, où le rapport en poids de (b) par rapport à (a) est de 18/1 à 6/1.

5. Utilisation selon l'une quelconque des revendications 1 à 4, où les agents de dispersion sont présents dans une quantité de 2 à 10% en poids, de préférence de 4 à 6% en poids, de la somme (a) + (b).

6. Utilisation selon la revendication 5, où les solides (a) + (b) sont présents dans la dispersion aqueuse dans une quantité totale de 1 kg/100 litres à 5 kg/100 litres, de préférence de 2 kg/100 litre à 4 kg/100 litres.

7. Utilisation selon l'une quelconque des revendications 5 à 6, où l'agent de dispersion est choisi dans le groupe composé de lignosulfonates de métaux alcalins, de métaux alcalino-terreux et d'ammonium.

8. Utilisation selon la revendication 7, où l'agent de dispersion est choisi dans le groupe composé de lignosulfonates d'ammonium.
